# EUROPEAN PATENT APPLICATION

(11) **EP 4 835 457 A1**
(43) Date of publication of application: **04.11.2026**
(21) Application number: 24911349.9
(22) Date of filing: 26.12.2024
(51) Int. Cl.: G01N 23/09

(54) **ANALYSIS AND TEST DEVICE AND SPENT FUEL REPROCESSING SYSTEM**

(30) Priority: 29.12.2023 CN 202311873405
(71) Applicant: Nuctech Company Limited, TongFang Building Shuangqinglu Haidian District Beijing 100084 (CN); Tsinghua University, Haidian District Beijing 100084 (CN)
(72) Inventor: ZONG, Chunguang, Beijing 100084 (CN); LI, Yuanjing, Beijing 100084 (CN); YANG, Yigang, Beijing 100084 (CN); WANG, Feng, Beijing 100084 (CN); FAN, Xuping, Beijing 100084 (CN); MENG, Hui, Beijing 100084 (CN); SHI, Junping, Beijing 100084 (CN); WANG, Dongyu, Beijing 100084 (CN); MING, Shenjin, Beijing 100084 (CN)
(74) Representative: Gunzelmann, Rainer
(86) International application number: PCT/CN2024/142780
(87) International publication number: WO 2025/140428

(57) **Abstract**

An analysis and test device and a spent fuel reprocessing system. The analysis and test device comprises: a base (1); a shielding body (7), which is fixed to the base (1) and comprises a main body portion (71) and a sealing portion (72), the sealing portion (72) being configured to seal an opening (711) in the main body portion (71) and being capable of being opened and closed; an accelerator assembly (3) and a radiation source (4), wherein the accelerator assembly (3) is located on one side of the shielding body (7) in a first direction (x) and is movably mounted on the base (1) in the first direction (x), and the radiation source (4) is fixed to one side of the accelerator assembly (3) in the first direction (x) and is located in the shielding body (7); a measurement assembly (5), which is fixed in the shielding body (7), is located, in the first direction (x), on the side of the radiation source (4) away from the accelerator assembly (3), and is configured to accommodate a test object, so as to implement a test mode; a calibration assembly (6), which is detachably mounted in the shielding body (7) by means of the opening (711), is located, in the first direction (x), on the side of the radiation source (4) away from the accelerator assembly (3), and is configured to accommodate a calibration object, so as to implement a calibration mode; and a detector assembly (8), which is arranged on one side of the shielding body (7) in a second direction (y) and is movably mounted on the base (1) in the first direction (x).

## Description

### CROSS-REFERENCE TO RELATED APPLICATIONS

The present disclosure is based on and claims the priority right of a Chinese application No. 202311873405.1 filed on December 29, 2023, the disclosure of which is incorporated herein by reference in its entirety.

### TECHNICAL FIELD

The present disclosure relates to the technical field of analysis and detection for radioactive substances, and in particular to an analysis and detection device and a spent fuel reprocessing system.

### BACKGROUND

In the conventional application of analysis and detection for radioactive substances, a strict distinction is made between a calibration mode and a working mode (i.e. detection mode). In the calibration mode, i.e. in the non-working state, a calibration object with known physical and chemical compositions obtained via experimental assay or precision detection is used as a test object to verify a test system and a test method, and the test result is input into the test system as important parameters. In the working mode, a test object with unknown compositions is input into a system measurement position for detection. Therefore, the whole test system needs to switch between the calibration mode and the working mode. At this time, the system needs to be shut down, and the test object and the calibration object need to be manually replaced, which requires a succession of complicated manual operations.

For some industries that produce industrial products in large quantities, the test system is only a front-end section therein but is the key link of the whole system production, and the excessively long downtime may affect the whole system production link. In addition, for systems involving detection of toxic and radioactive test object, the switching between the two modes may also expose analyzing and operating operators to hazards such as radiation.

### SUMMARY

The embodiments of the present disclosure provide an analysis and detection device and a spent fuel reprocessing system, which can improve the detection and maintenance efficiency of the analysis device.

According to a first aspect of the present disclosure, an analysis and detection device is provided, including:
a base;
a shielding body fixed to the base and configured to provide shielding from radiation, the shielding body including a main body portion and a closure portion, wherein the main body portion is provided with an opening, and the closure portion is configured to close the opening and is openable and closable;
an accelerator assembly and a radiation source, wherein the accelerator assembly is located at a side of the shielding body along a first direction x and is movably mounted on the base along the first direction; the radiation source is fixed at a side of the accelerator assembly along the first direction and is disposed inside the shielding body for receiving the radiation beam emitted by the accelerator assembly to generate particles;
a measurement assembly fixed inside the shielding body, located at a side of the radiation source away from the accelerator assembly along the first direction, and configured to accommodate a test object to enable a detection mode;
a calibration assembly removably mounted inside the shielding body through the opening, located at the side of the radiation source away from the accelerator assembly along the first direction, and configured to accommodate a calibration object to enable a calibration mode; and
a detector assembly disposed at a side of the shielding body in a second direction perpendicular to the first direction, movably mounted on the base along the first direction, and configured to receive the particles having interacted with the test object or the calibration object so as to analyze a type and a content of the test object or the calibration object.

In some embodiments, when the calibration assembly needs to be removed or installed, the closure portion is in an open state; in the calibration mode or the detection mode, the closure portion is in a closed state.

In some embodiments, the opening is located at the top or on a side of the main body portion.

In some embodiments,
in the calibration mode, the calibration assembly is located between the measurement assembly and the radiation source along the first direction;
in the detection mode, the calibration assembly is removed.

In some embodiments, in the calibration mode, the radiation source is spaced from the calibration assembly at a first distance along the first direction; and in the detection mode, the radiation source is spaced from the measurement assembly at a second distance along the first direction, with the first distance being equal to the second distance.

In some embodiments,
in the calibration mode, the detector assembly is aligned with the calibration assembly along the first direction; or
in the detection mode, the detector assembly is aligned with the measurement assembly along the first direction.

In some embodiments, the analysis and detection device further includes a linear movement platform mounted on the base and configured to drive the detector assembly to move along the first direction.

In some embodiments, the analysis and detection device further includes a second bracket disposed on the base and provided with a slide rail, wherein the accelerator assembly is movably mounted on the slide rail along the first direction.

In some embodiments, the measurement assembly includes a measurement cell for accommodating the test object, and the calibration assembly includes a calibration cell for accommodating the calibration object; an inner bottom surface of the shielding body is provided with two positioning grooves for positioning the measurement cell and the calibration cell respectively; and at least the calibration cell is removable relative to the positioning groove.

In some embodiments, on a side of the accelerator assembly is provided a drift tube extending along the first direction for defining a path of the radiation beam, wherein the drift tube extends into the shielding body and has its end portion fixed with the radiation source.

In some embodiments, the analysis and detection device further includes:
a first driving component configured to drive the accelerator assembly to move along the first direction; and/or
a second driving component configured to drive the detector assembly to move along the first direction; and/or
a third driving component configured to drive the accelerator assembly and the detector assembly to move along the first direction.

In a second aspect of the present disclosure, a spent fuel reprocessing system is provided, which includes the analysis and detection device in the above embodiments.

Based on the above technical solution, the shielding body is stationary, and the removal and installation of the calibration assembly is achieved through opening and closure of the closure portion, resulting in a simple structure and easy arrangement. Further, in either the calibration mode or the detection mode, the positions of the accelerator assembly, the radiation source and the detector assembly can be conveniently adjusted to meet the requirements in this mode, thereby enabling the analysis and detection device to be flexibly switched between the calibration mode and the detection mode. This facilitates detection and maintenance, and reduces the impact on the efficiency of the whole production system by the long calibration downtime of the analysis and detection device. Moreover, none of the components undergo movement in the second direction, which can reduce the dimension of the analysis and detection device in the second direction. The elimination of a two-degree-of-freedom platform can also reduce the height in the third direction. This results in a simple compact overall structure, small spatial occupation and low costs.

### BRIEF DESCRIPTION OF THE DRAWINGS

The accompanying drawings described herein are provided to facilitate further understanding of the present disclosure and constitute a part of the present application. The illustrative embodiments of the present disclosure and the descriptions thereof serve to explain the present disclosure without imposing any inappropriate limitation thereon. In the accompanying drawings:
FIG. 1 is a front view of an analysis and detection device according to some embodiments of the present disclosure.
FIG. 2 is a side view of the analysis and detection device in a detection mode according to some embodiments of the present disclosure.
FIG. 3 is a top view of the analysis and detection device according to some embodiments of the present disclosure.
FIG. 4 is a schematic view showing that a detector assembly is aligned with a calibration assembly in a calibration mode.
FIG. 5 is a side view in the calibration mode.
FIG. 6 is a schematic view where the calibration assembly is removed.
FIG. 7 is a schematic view showing that the detector assembly is aligned with a measurement assembly in the detection mode.
FIG. 8 is a schematic view showing that a radiation source is brought close to the measurement assembly in the detection mode.

Explanation of the reference signs:
1. base; 2. linear movement platform; 21. lead screw; 22. slider; 23. force applying member; 24. first bracket; 3. accelerator assembly; 30. drift tube; 4. radiation source; 5. measurement assembly; 6. calibration assembly; 7. shielding body; 71. main body portion; 711. opening; 712. positioning groove; 72. closure portion; 8. detector assembly; 81. shell; 82. detector; 9. second bracket; x. first direction; y. second direction; z. third direction.

### DETAILED DESCRIPTION

The present disclosure is described in detail below. In the following paragraphs, different aspects of the embodiments are defined in more detail. Aspects so defined may be combined with any other aspect or aspects unless explicitly stated to be non-combinable. In particular, any feature considered to be preferred or advantageous may be combined with one or more other features considered to be preferred or advantageous.

The terms "first", "second", and the like in the present disclosure are used for convenience of description only to distinguish different components having the same name, and do not indicate any sequential order or priority.

In the description of the present disclosure, directional or positional relationships indicated by "upper", "lower", "top", "bottom", "front", "rear", "inner", and "outer" and the like are those based on the drawings. These terms are used only for the convenience of describing the present disclosure, and do not indicate or imply that the device referred to must have a specific orientation or be constructed and operated in a specific orientation, and thus, should not be construed as limiting the scope of the present disclosure.

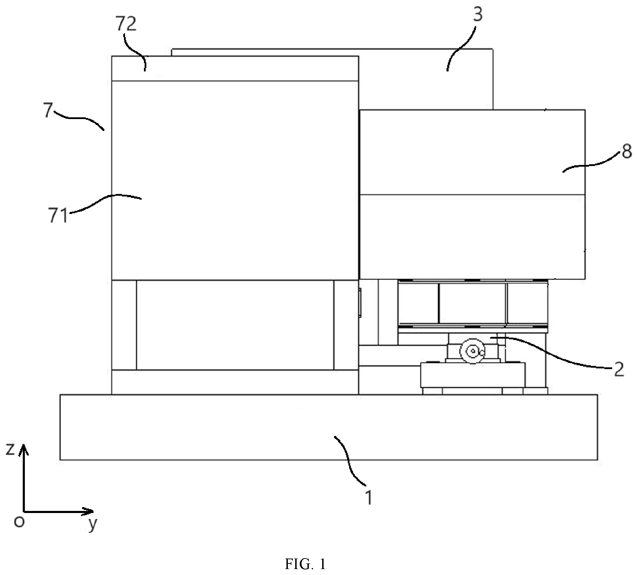

The present disclosure provides an analysis and detection device having a calibration mode and a detection mode. In some embodiments, as shown in FIGS. 1-8, the analysis and detection device of the present disclosure includes:
a base 1;
a shielding body 7 fixed to the base 1 and configured to provide shielding from radiation, the shielding body 7 including a main body portion 71 and a closure portion 72, wherein the main body portion 71 is provided with an opening 711, and the closure portion 72 is configured to close the opening 711 and is openable and closable;
an accelerator assembly 3 and a radiation source 4, wherein the accelerator assembly 3 is located at a side of the shielding body 7 along a first direction x and is movably mounted on the base 1 along the first direction x; and the radiation source 4 is fixed on a side of the accelerator assembly 3 along the first direction x and is disposed inside the shielding body 7 for receiving the radiation beam emitted by the accelerator assembly 3 to generate particles;
a measurement assembly 5 fixed inside the shielding body 7, located at a side of the radiation source 4 away from the accelerator assembly 3 along the first direction x, and configured to accommodate a test object to enable a detection mode;
a calibration assembly 6 removably mounted inside the shielding body 7 through the opening 711, located at the side of the radiation source 4 away from the accelerator assembly 3 along the first direction x, and configured to accommodate a calibration object to enable a calibration mode; and
a detector assembly 8 disposed at a side of the shielding body 7 in a second direction y perpendicular to the first direction x, movably mounted on the base 1 along the first direction x, and configured to receive the particles having interacted with the test object or the calibration object so as to analyze a type and a content of the test object or the calibration object.

In particular, the base 1 may be a flat plate structure that is made of, for example, steel or other materials. The first direction x and the second direction y are both located within the horizontal plane and are perpendicular to each other, and a third direction z is perpendicular to the first direction x and the second direction y, namely perpendicular to the horizontal plane.

In both the calibration mode and the working mode, the shielding body 7 is required to fully enclose the area where the measurement assembly 5, the calibration assembly 6 and the radiation source 4 are located. For example, the shielding body 7 may have a cuboidal gate-shaped structure, or a gate-shaped structure with an arched top, etc. For example, the main body portion 71 of the shielding body 7 may be a hollow cuboidal structure open at one end or both ends. For example, the shielding body 7 has a hollow cavity inside to accommodate the measurement assembly 5 and the calibration assembly 6. The position of the shielding body 7 is kept unchanged in the calibration mode and the detection mode, and the calibration assembly 6 as well as the test object are taken in and out by opening and closing the closure portion 72. The closure portion 72 may be a flat or arched gate-shaped structure.

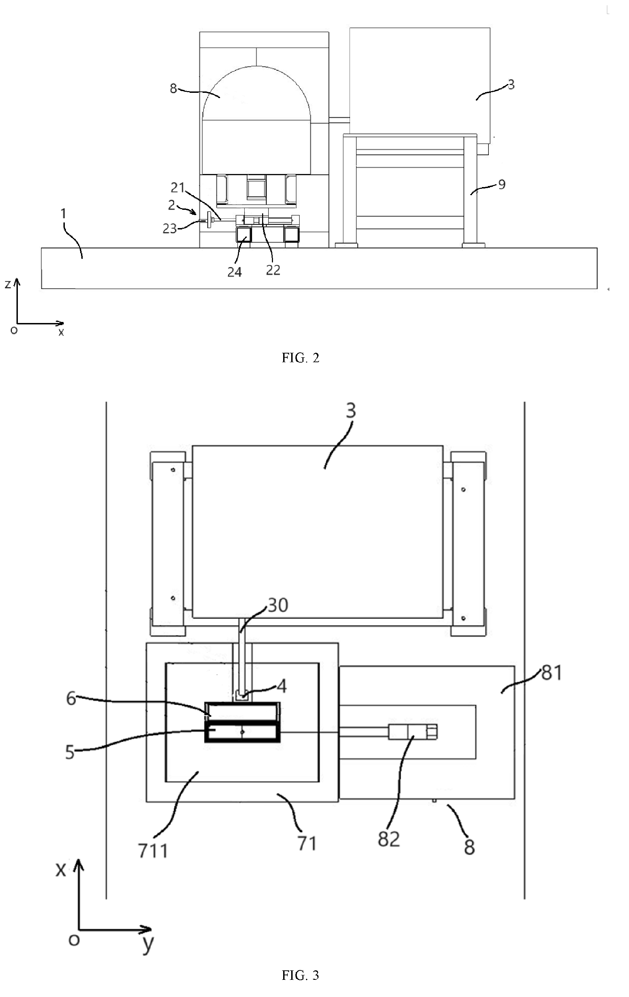

As shown in FIG. 1 and FIG. 2, the accelerator assembly 3 is configured to emit radiation beam. On a side of the accelerator assembly 3 along the first direction x is disposed a drift tube 30, which extends along the first direction x, and is configured to guide a radiation beam current. The radiation source 4 is located at the end of the drift tube 30 away from the accelerator assembly 3 and is configured to receive the radiation beam emitted by the accelerator assembly 3 to generate particles. The accelerator assembly 3 is movably mounted on the base 1 along the first direction x in order to adjust a distance between the radiation source 4 and the measurement assembly 5 or the calibration assembly 6 along the first direction x, and the accelerator assembly 3 may be directly or indirectly mounted on the base 1.

The measurement assembly 5 may include a measurement cell for accommodating the test object, and the calibration assembly 6 may include a calibration cell for accommodating the calibration object. The test object and the calibration object may be liquid. The measurement assembly 5 and the calibration assembly 6 are both located at a side of the radiation source 4 away from the accelerator assembly 3 along the first direction x, and both the measurement assembly 5 and the calibration assembly 6 may be arranged side by side along the first direction x and may be of the same size.

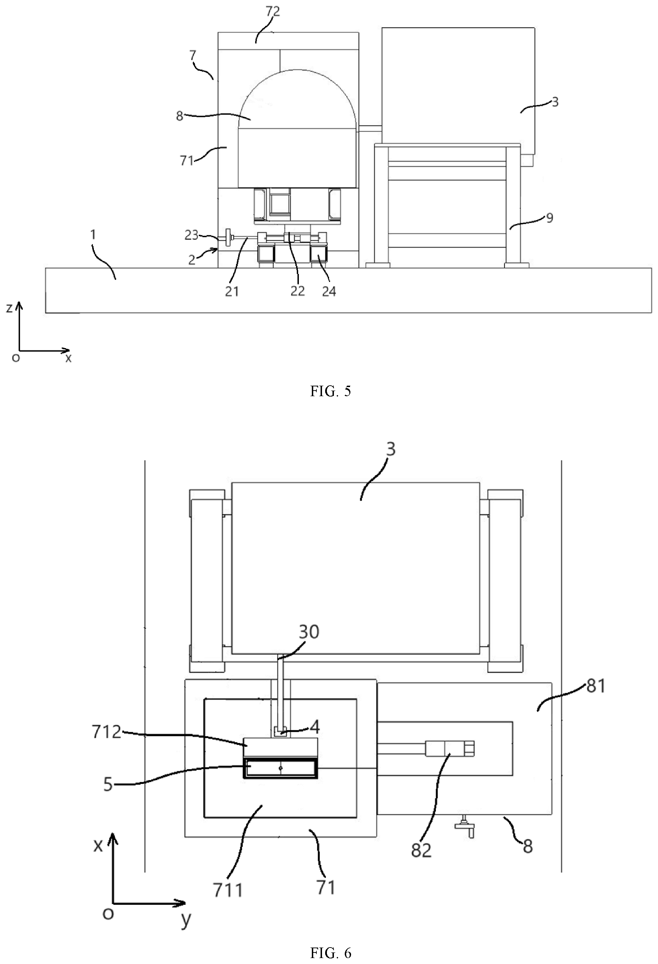

In one mounting mode, as shown in FIG. 6, two positioning grooves 712 are provided in an inner bottom surface of the shielding body 7. The two positioning grooves 712 may be disposed side by side along the first direction x to position the measurement cell and the calibration cell, respectively. This means involves simple structure and convenient removal and installation. In order to enable the measurement cell or the calibration cell to adapt to the height of the radiation source 4 and the detector assembly 8, the bottom surface of the shielding body 7 may be spaced from the base 1 by a predetermined distance. Alternatively, if the shielding body 7 is in contact with the upper surface of the base 1, the shielding body 7 may not be provided with a bottom surface, and the two positioning grooves 712 may be directly formed on the upper surface of the base 1. In this case, the shielding body 7 may be a cylindrical body having an opening 711 at one end but not having the closure portion 72. By covering the two positioning grooves 712 provided in the upper surface of the base 1 through the opening 711, a shielding effect can be achieved.

In another mounting mode, a mounting seat is disposed in a region inside the shielding body 7. The measurement assembly 5 and the calibration assembly 6 may be disposed on the mounting seat, so that they can be reliably held in position and maintained at appropriate heights for easy installation.

The calibration cell and the measurement cell may be cuboidal slots, the length direction of which is consistent with the second direction y, and which may be made of a metal material. In the calibration mode, the radiation source 4 is located at a side of the calibration cell along the first direction x, and particles generated by the radiation source 4 can enter a calibration object such as liquid through a metal sidewall of the calibration cell and then be received by the detector assembly 8 to analyze the type and the content of the calibration object. In general, in the calibration mode, the measurement cell does not contain a test object. Alternatively, if the measurement cell contains a test object, in order to prevent the test object from being affected, a shielding layer may be disposed on an external side surface of the calibration cell away from the radiation source 4 along the first direction x. In the detection mode, the radiation source 4 is located at a side of the measurement cell along the first direction x, and particles generated by the radiation source 4 can enter a test object, such as liquid, through a metal sidewall of the measurement cell.

The detector assembly 8 is disposed at a side of the shielding body 7 in the second direction y, and is movably mounted on the base 1 along the first direction x so as to adjust a position of the detector assembly 8 along the first direction x to be aligned with that of the measurement assembly 5 or the calibration assembly 6.

Taking the detection mode (i.e., working mode) as an example, the radiation beam emitted from the accelerator assembly 3 enters the radiation source 4 through the drift tube 30; the radiation source 4 may generate particles such as neutrons, which enter the test object in the measurement assembly 5; and finally the particles such as neutrons having interacted with the test object or the calibration object are received by the detector assembly 8, so as to analyze the type and the content of the test object according to the number of the particles.

In this embodiment, the shielding body 7 is stationary, and the removal and installation of the calibration assembly 6 is achieved through opening and closure of the closure portion 72, resulting in a simple structure and easy arrangement. Further, in either the calibration mode or the detection mode, the accelerator assembly 3, the radiation source 4 and the detector assembly 8 can be conveniently adjusted to positions corresponding to either of the measurement assembly 5 or the calibration assembly 6 to meet the requirements in this mode, thereby enabling the analysis and detection device to be flexibly switched between the calibration mode and the detection mode. This facilitates detection and maintenance, and reduces the impact on the efficiency of the whole production system by the long calibration downtime of the analysis and detection device. Moreover, none of the components undergo movement in the second direction y, which can reduce the dimension of the analysis and detection device in the second direction y. The elimination of a two-degree-of-freedom platform can also reduce the height in the third direction z. This results in a simple compact overall structure, small spatial occupation and low costs.

Furthermore, if the test object is toxic or radioactive, the shielding body 7 can provide protection no matter in the calibration mode or the detection mode to protect operators from injury.

In some embodiments, the accelerator assembly 3 and the detector assembly 8 move independently of each other and can have their positions adjusted respectively to achieve the optimal working positions of the radiation source 4 and the detector assembly 8 thereby to achieve better detection effects. In some embodiments, the accelerator assembly 3 and the detector assembly 8 may be simultaneously moved in synchronization such that the accelerator assembly 3, the radiation source 4 and the detector assembly 8 can be adjusted from a position corresponding to the calibration assembly 6 to a position corresponding to the measurement assembly 5. At the time of mode switching, the displacement amounts of the accelerator assembly 3 and of the detector assembly 8 along the first direction x are the same.

In some embodiments, when the calibration assembly 6 needs to be removed or installed, the closure portion 72 is in an open state; in the calibration mode or the detection mode, the closure portion 72 is in a closed state.

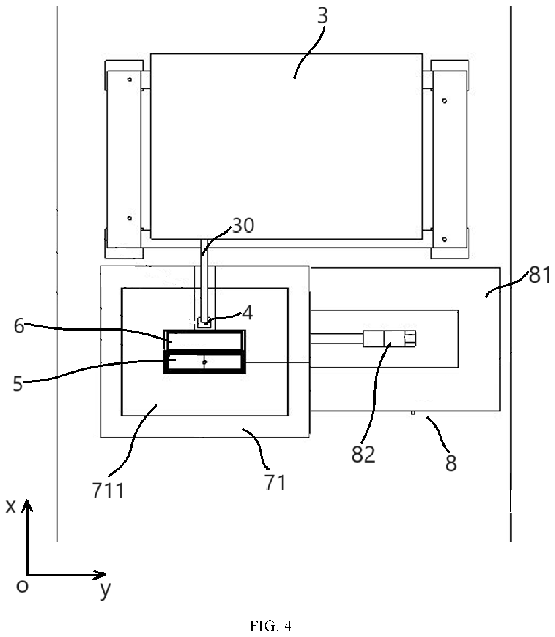

As shown in FIG. 4, when it is required to install the calibration assembly 6, the closure portion 72 is opened, in which the closure portion 72 may adopt a gate structure and rotate about a hinge shaft connecting the closure portion 72 with the main body portion 71; alternatively, the closure portion 72 may adopt a push-pull structure which, when pushed outwards, exposes the opening 711; or the closure portion 72 may be directly separated from the main body portion 71. At this time, the calibration assembly 6 may be installed, and the opening 711 is closed with the closure portion 72 to provide protection to thereby allow calibration to be performed. As shown in FIG. 5, after the calibration mode is completed, the closure portion 72 is opened and the calibration assembly 6 may be removed. In the calibration state or the detection mode, the closure portion 72 closes the opening 711, thus fully enclosing the positions where the radiation source 4, the measurement assembly 5 and the calibration assembly 6 are located, and protecting these assemblies from radiation.

In this embodiment, the opening and closing of the closure portion 72 enables convenient installation and removal of the calibration assembly 6 to switch between the detection mode and the calibration mode, and during operation in these modes, the shielding body 7 can provide protection to prevent radioactive substances from leaking out.

In some embodiments, as shown in FIGS. 2 and 3, the opening 711 is located at the top of the main body portion 71. For example, the entire top of the main body portion 71 may be provided as the opening 711, and the closure portion 72 may be a plate-like structure to cover the opening 711.

In this embodiment, the closure portion 72 is provided on the top of the shielding body 7, away from the positions of the radiation source 4 and the detector assembly 8, such that placement of the calibration assembly 6 may be free from the influence of the measurement assembly 5, and it is less likely to spill when a calibration assembly 6 containing liquid is placed. Moreover, it provides an optimal operating angle upon removal and installation of the calibration assembly 6.

In some embodiments, the opening 711 is located on a side of the main body portion 71, for example, it may be provided on a side of the shielding body 7 away from the detector assembly 8.

In some embodiments, as shown in FIG. 4, in the calibration mode, the calibration assembly 6 is located between the measurement assembly 5 and the radiation source 4 along the first direction x; in the detection mode, the calibration assembly 6 is removed, as shown in FIG. 6.

In this embodiment, the calibration assembly 6 is mounted between the measurement assembly 5 and the radiation source 4 along the first direction x, such that in the calibration mode, the radiation source 4 is closer to the calibration assembly 6, while the measurement assembly 5 is located at a side remote from the radiation source 4; whereas in the detection mode, after the calibration assembly 6 is removed, the radiation source 4 is move close to the measurement assembly 5 along the first direction x, so that the test object can be detected. Thus, the analysis and detection device can be flexibly and conveniently switched between the calibration mode and the detection mode.

In some embodiments, in the calibration mode, the radiation source 4 is spaced from the calibration assembly 6 at a first distance along the first direction x; in the detection mode, the radiation source 4 is spaced from the measurement assembly 5 at a second distance along the first direction x, wherein the first distance is equal to the second distance.

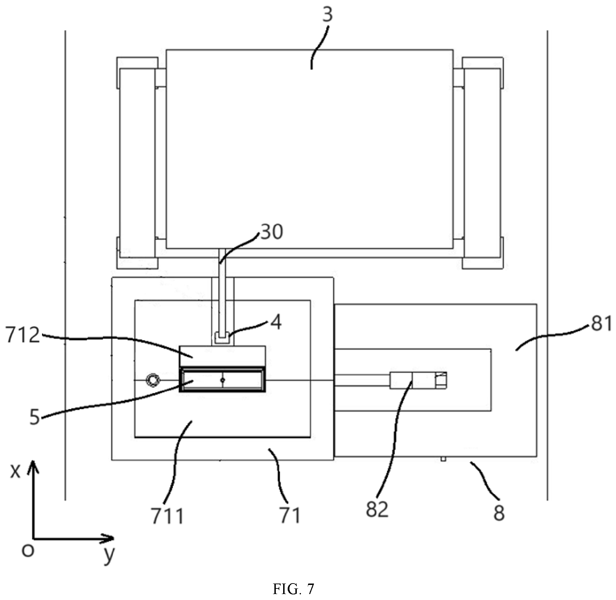

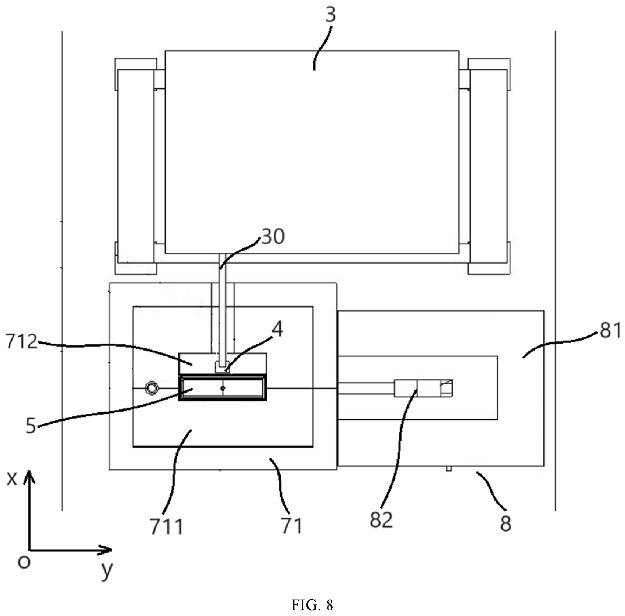

As shown in FIG. 4, when it is required to enter the calibration mode, the radiation source 4 is at a short distance from the calibration assembly 6. As shown in FIG. 6, after calibration is completed, the calibration assembly 6 is removed, and at this time, the radiation source 4 is at a great distance from the measurement assembly 5 along the first direction x. The detector 82 is offset from the measurement assembly 5 along the first direction x as well. As shown in FIG. 7, when it is required to enter the detection mode, the detector assembly 8 is moved along the first direction x into alignment with the measurement assembly 5, and as shown in FIG. 8, the accelerator assembly 3 is moved along the first direction x towards the measurement assembly 5 until the distance between the radiation source 4 and the measurement assembly 5 along the first direction x is consistent with the distance between the radiation source 4 and the calibration assembly 6 in the calibration mode.

In this embodiment, the distance between the radiation source 4 and the test object along the first direction x in the detection mode can be made consistent with the distance between the radiation source 4 and the calibration object in the calibration mode, ensuring that the test conditions are the same in these two modes, thus improving the detection accuracy of the test object.

In some embodiments, in the calibration mode, the detector assembly 8 is aligned with the calibration assembly 6 along the first direction x; alternatively, in the detection mode, the detector assembly 8 is aligned with the measurement assembly 5 along the first direction x.

Specifically, as can be seen from FIG. 3, the detector assembly 8 includes a shell 81 and a detector 82. The detector 82 is disposed inside the shell 81, and the shell 81 is made of a shielding material. In the top views such as in FIG. 3, the rectangular frame at the top of the detector assembly 8 is also merely used to visualize the structure of the detector 82 inside.

In the calibration mode, the detector 82 is aligned with the calibration assembly 6 along the first direction x, that is, the detector 82 and the calibration assembly 6 are located on the same line, which extends in the second direction y; in the detection mode, the detector 82 is aligned with the measurement assembly 5 along the first direction x, that is, the detector 82 and the measurement assembly 5 are located on the same line, which extends in the second direction y.

In this embodiment, by moving at least one of the accelerator assembly 3 and the detector assembly 8 along the first direction x, the positions of the radiation source 4 and the detector assembly 8 can be made to match either of the measurement assembly 5 or the calibration assembly 6 so as to flexibly meet the positional requirements of the main components in the calibration mode and the detection mode.

In some embodiments, as shown in FIG. 2, the analysis and detection device further includes a linear movement platform 2 mounted on the base 1 and configured to drive the detector assembly 8 to move along the first direction x.

In this embodiment, by providing the linear movement platform 2, the detector assembly 8 can be placed at an appropriate height, and the detector assembly 8 can be guided to move smoothly along the first direction x, thereby enabling the position of the detector assembly 8 to be accurately adjusted in different working modes.

In some embodiments, as shown in FIG. 2, the linear movement platform 2 includes:
a first bracket 24 disposed on the base 1;
a lead screw 21 mounted on the first bracket 24, rotatable about its own axis and extending along the first direction x; and
a slider 22 engaging with the lead screw 21 to form a lead screw-nut mechanism, and movable along the first direction x;
wherein the detector assembly 8 is connected to and disposed above the slider 22.

Specifically, a support frame may be disposed on the slider 22 to mount the detector assembly 8 with a large volume. A force applying member 23, such as a handwheel, is disposed on an end of the lead screw 21 away from the accelerator assembly 3 along the first direction x for receiving external force to drive the lead screw 21 to rotate, so as to drive the slider 22 to move along the lead screw 21, such that the detector assembly 8 is moved along the first direction x. Optionally, the lead screw 21 may also be driven in an automatic manner.

In this embodiment, the arrangement of the lead screw-nut mechanism enables the detector assembly 8 to move smoothly along the first direction x, and facilitates continuous fine adjustment, such that the detector 82 in the detector assembly 8 can be aligned with the measurement assembly 5 or the calibration assembly 6 more accurately, and the detection accuracy can be improved.

In some embodiments, as shown in FIG. 2, the analysis and detection device further includes a second bracket 9, which is disposed on the base 1 and provided with a slide rail, and the accelerator assembly 3 is movably mounted on the slide rail along the first direction x. For example, the accelerator assembly 3 may have its position adjusted manually or may be automatically driven.

In this embodiment, by providing the second bracket 9 for supporting the accelerator assembly 3, the accelerator assembly 3 can be placed at an appropriate height, and under the guidance of the slide rail, the accelerator assembly 3 can be moved smoothly along the first direction x, thereby enabling the position of the accelerator assembly 3 to be accurately adjusted in different working modes. Moreover, when the accelerator assembly 3 needs to be maintained, the accelerator assembly 3 may be pushed outward along the first direction x relative to the second bracket 9 for inspection and maintenance.

In some embodiments, the second bracket 9 is disposed on the linear movement platform 2. The linear movement platform 2 drives the second bracket 9, such that the accelerator assembly 3 is moved along the first direction x synchronously with the detector assembly 8.

In some embodiments, as shown in FIGS. 3 and 6, the measurement assembly 5 includes a measurement cell for accommodating the test object, and the calibration assembly 6 includes a calibration cell for accommodating the calibration object. The inner bottom surface of the shielding body 7 is provided with two positioning grooves 712 for positioning the measurement cell and the calibration cell respectively, and at least the calibration cell is removable relative to the positioning groove 712.

The two positioning grooves 712 are disposed side by side along the first direction x. Only bottom regions of the measurement cell and the calibration cell are placed within the positioning grooves 712 to achieve positioning, whereas middle and upper regions thereof are exposed outside the positioning grooves 712. The calibration cell is removable. When it is necessary to switch to the detection mode, as shown in FIG. 6, the calibration cell needs to be removed; or this facilitates replacement of the calibration cell containing different calibration objects, which may be solutions of different concentrations. Further, the measurement cell is also arranged in a removable form, or may be fixed non-removably inside the positioning groove 712. A clearance fit may be adopted between the measurement cell as well as the calibration cell and the positioning groove 712, which facilitates removal while guaranteeing the positioning effect.

In this embodiment, the calibration cell can be conveniently installed or removed, which further improves the efficiency of switching between the calibration mode and the detection mode, or facilitates replacement of different calibration cells to thereby improve the calibration efficiency. Moreover, this means of installing the measurement cell and the calibration cell involves simple structure and does not require additional mounting components.

Optionally, a mounting seat is provided in a region inside the shielding body 7. The measurement assembly 5 and the calibration assembly 6 may be disposed on the mounting seat, so that they can be reliably held in position and maintained at appropriate heights. For example, the calibration assembly 6 may further include a third bracket, which is removably mounted and on which the calibration cell is mounted in a pluggable manner; the mounting seat includes a vertical plate provided with a hook member or a support member, which allows the third bracket to be hung on or placed on the vertical plate, thus enabling convenient overall removal of the calibration assembly 6. The pluggable installation of the calibration cell on the third bracket enables convenient replacement of the calibration cells that contain different calibration objects, thereby improving the calibration efficiency.

In some embodiments, on a side of the accelerator assembly 3 is provided a drift tube 30 extending along the first direction x for defining the path of the radiation beam. The drift tube 30 extends into the shielding body 7 and has its end portion fixed with the radiation source 4. This structure facilitates to ensure the positional relationship between the radiation source 4 and the drift tube 30, so that the radiation within the drift tube 30 can reliably enter the radiation source 4 to generate particles, thereby improving the working reliability of the analysis and detection device.

In some embodiments, the analysis and detection device further includes:
a first driving component configured to drive the accelerator assembly 3 to move along the first direction x; and/or
a second driving component configured to drive the detector assembly 8 to move along the first direction x; and/or
a third driving component configured to drive the accelerator assembly 3 and the detector assembly 8 to move along the first direction x,
wherein the first driving component, the second driving component and the third drive component are all linear drive components, such as electric push rods, pneumatic cylinders, hydraulic cylinders or the like, or drive components that convert rotational movement into linear movement.

In this embodiment, by providing the first driving component and the second driving component to drive the accelerator assembly 3 and the detector assembly 8 to move along the first direction x respectively, or by providing the third driving component to simultaneously drive the accelerator assembly 3 and the detector assembly 8 to move along the first direction x, the degree of automation in switching the analysis and detection device between the calibration mode and the detection mode can be enhanced, efficiency and control accuracy can be improved, and manual participation can be reduced.

The specific working principle of the analysis and detection device of the present disclosure will be described below.

As shown in FIG. 4, when the analysis and detection device needs to enter the calibration mode, the closure portion 72 is opened, the calibration assembly 6 is installed, and the detector 82 is made to be aligned with the calibration assembly 6 along the first direction x. FIG. 5 is a side view of the calibration mode, in which the detector assembly 8 is, as a whole, closer to the accelerator assembly 3 along the first direction x. Then, the closure portion 72 is brought into a closed state, and operation under the calibration mode may be performed.

As shown in FIG. 6, after the calibration is completed, the closure portion 72 is opened and the calibration assembly 6 is removed.

As shown in FIG. 7, when the analysis and detection device needs to enter the detection mode, the detector assembly 8 is moved along the first direction x towards a side away from the accelerator assembly 3, so that the detector 82 is aligned with the measurement assembly 5 along the first direction x. As shown in FIG. 8, the accelerator assembly 3 is moved along the first direction x towards the side close to the measurement assembly 5, so that the distance between the radiation source 4 and the measurement assembly 5 along the first direction x is equal to the distance between the radiation source 4 and the calibration assembly 6 in the calibration mode. Then, the closure portion 72 is brought into the closed state, and operation under the detection mode may be performed. FIG. 2 is a side view of the detection mode.

Secondly, the present disclosure provides a spent fuel reprocessing system, which includes the analysis and detection device in the above embodiments. The spent fuel refers to the nuclear fuel discharged from a reactor after "burning" to a certain extent in the reactor. The spent fuel reprocessing system involves with the treatment of spent fuel having been used in the reactors, and separation of useful elements (such as uranium and plutonium) from fission products and other substances for use in the manufacture of new nuclear fuel elements to achieve partial recycling of nuclear fuels, or extraction of plutonium therefrom for the manufacture of nuclear weapons.

The analysis and detection device in the present disclosure can be used for detecting specific components in the spent fuel. As this kind of analysis and detection device can be flexibly switched between the calibration mode and the detection mode, which is convenient for detection and maintenance, the influence of long calibration downtime of the analysis and detection device on the overall working efficiency of the spent fuel reprocessing system can be reduced. Moreover, as the test object is toxic or radioactive, the shielding body 7 can provide protection no matter in the calibration mode or the detection mode to protect operators from injury.

The embodiments provided by the present disclosure have been described in detail. Specific embodiments are used herein to elaborate on the principles and implementations of the present disclosure. The foregoing description of the embodiments is merely intended to facilitate understanding of the method and core concept of the present disclosure. It should be noted that those skilled in the art may make various modifications and improvements to the present disclosure without departing from the principles thereof, and such modifications and improvements shall also fall within the protection scope of the claims of the present disclosure.

## Claims

1. An analysis and detection device, comprising:
a base (1);
a shielding body (7) fixed to the base (1) and configured to provide shielding from radiation, the shielding body (7) comprising a main body portion (71) and a closure portion (72), wherein the main body portion (71) is provided with an opening (711), and the closure portion (72) is configured to close the opening (711) and is openable and closable;
an accelerator assembly (3) and a radiation source (4), wherein the accelerator assembly (3) is located at a side of the shielding body (7) along a first direction (x) and is movably mounted on the base (1) along the first direction (x); the radiation source (4) is fixed at a side of the accelerator assembly (3) along the first direction (x) and is disposed inside the shielding body (7) for receiving the radiation beam emitted by the accelerator assembly (3) to generate particles;
a measurement assembly (5) fixed inside the shielding body (7), located at a side of the radiation source (4) away from the accelerator assembly (3) along the first direction (x), and configured to accommodate a test object to enable a detection mode;
a calibration assembly (6) removably mounted inside the shielding body (7) through the opening (711), located at the side of the radiation source (4) away from the accelerator assembly (3) along the first direction (x), and configured to accommodate a calibration object to enable a calibration mode; and
a detector assembly (8) disposed at a side of the shielding body (7) in a second direction (y) perpendicular to the first direction (x), movably mounted on the base (1) along the first direction (x), and configured to receive the particles having interacted with the test object or the calibration object so as to analyze a type and a content of the test object or the calibration object.

2. The analysis and detection device according to claim 1, wherein when the calibration assembly (6) needs to be removed or installed, the closure portion (72) is in an open state; in the calibration mode or the detection mode, the closure portion (72) is in a closed state.

3. The analysis and detection device according to claim 1 or 2, wherein the opening (711) is located at the top or on a side of the main body portion (71).

4. The analysis and detection device according to any one of claims 1 to 3, wherein
in the calibration mode, the calibration assembly (6) is located between the measurement assembly (5) and the radiation source (4) along the first direction (x);
in the detection mode, the calibration assembly (6) is removed.

5. The analysis and detection device according to claim 4, wherein in the calibration mode, the radiation source (4) is spaced from the calibration assembly (6) at a first distance along the first direction (x); and in the detection mode, the radiation source (4) is spaced from the measurement assembly (5) at a second distance along the first direction (x), with the first distance being equal to the second distance.

6. The analysis and detection device according to any one of claims 1 to 5, wherein
in the calibration mode, the detector assembly (8) is aligned with the calibration assembly (6) along the first direction (x); or
in the detection mode, the detector assembly (8) is aligned with the measurement assembly (5) along the first direction (x).

7. The analysis and detection device according to any one of claims 1 to 6, further comprising a linear movement platform (2) mounted on the base (1) and configured to drive the detector assembly (8) to move along the first direction (x).

8. The analysis and detection device according to any one of claims 1 to 7, further comprising a second bracket (9) disposed on the base (1) and provided with a slide rail, wherein the accelerator assembly (3) is movably mounted on the slide rail along the first direction (x).

9. The analysis and detection device according to any one of claims 1 to 8, wherein the measurement assembly (5) comprises a measurement cell for accommodating the test object, and the calibration assembly (6) comprises a calibration cell for accommodating the calibration object; an inner bottom surface of the shielding body (7) is provided with two positioning grooves (712) for positioning the measurement cell and the calibration cell respectively; and at least the calibration cell is removable relative to the positioning groove (712).

10. The analysis and detection device according to any one of claims 1 to 9, wherein on a side of the accelerator assembly (3) is provided a drift tube (30) extending along the first direction (x) for defining a path of the radiation beam, wherein the drift tube (30) extends into the shielding body (7) and has its end portion fixed with the radiation source (4).

11. The analysis and detection device according to any one of claims 1 to 10, further comprising:
a first driving component configured to drive the accelerator assembly (3) to move along the first direction (x); and/or
a second driving component configured to drive the detector assembly (8) to move along the first direction (x); and/or
a third driving component configured to drive the accelerator assembly (3) and the detector assembly (8) to move along the first direction (x).

12. A spent fuel reprocessing system, comprising the analysis and detection device according to any one of claims 1 to 11.
